# EUROPÄISCHE PATENTSCHRIFT

(11) **EP 2 761 073 B1**
(45) Veröffentlichungstag und Bekanntmachung des Hinweises auf die Patenterteilung: **18.11.2015**
(21) Anmeldenummer: 12761948.4
(22) Anmeldetag: 14.09.2012
(51) Int. Cl.: D06F 35/00, A47L 15/42

(54) **WASSERFÜHRENDES HAUSHALTSGERÄT MIT EINER KATALYTISCH WIRKSAMEN INNEREN OBERFLÄCHE SOWIE VERFAHREN ZU SEINEM BETRIEB**
WATER-USING DOMESTIC APPLIANCE WITH A CATALYTICALLY ACTIVE INTERIOR SURFACE AND METHOD FOR OPERATING THE SAME
APPAREIL MÉNAGER À CIRCULATION D'EAU, PRÉSENTANT UNE SURFACE INTÉRIEURE CATALYTIQUEMENT ACTIVE, ET PROCÉDÉ POUR LE FAIRE FONCTIONNER

(30) Priorität: 28.09.2011 DE 102011083572
(43) Veröffentlichungstag der Anmeldung: 06.08.2014
(73) Patentinhaber: BSH Hausgeräte GmbH, 81739 München (DE)
(72) Erfinder: BARRADO FRANCO, Antonio, 10317 Berlin (DE); HANAU, Andreas, 12359 Berlin (DE); SCHAUB, Hartmut, 14656 Brieselang (DE); SCHEPERS, Klaus, 35619 Braunfels (DE)
(86) Internationale Anmeldenummer: PCT/EP2012/068107
(87) Internationale Veröffentlichungsnummer: WO 2013/045294

(56) Entgegenhaltungen:
- EP-A2- 0 761 809
- DE-A1-102009 026 712
- KR-A-020070 066 334

## Beschreibung

Die Erfindung betrifft ein wasserführendes Haushaltsgerät mit einer katalytisch wirksamen inneren Oberfläche sowie ein Verfahren zu seinem Betrieb. Insbesondere betrifft die Erfindung ein wasserführendes Haushaltsgerät mit einem Behälter zur Aufnahme von zu reinigenden Gegenständen und mindestens einer eine katalytisch wirkende Substanz enthaltenden inneren Oberfläche sowie ein Verfahren zu seinem Betrieb, siehe KR-A-1020070066334.

In wasserführenden Haushaltsgeräten werden im Allgemeinen Gegenstände, die auf unterschiedliche Weise verunreinigt sind, gereinigt. So fallen in Geschirrspülmaschinen Essensreste an und das Spektrum an Verunreinigungen bei in Waschmaschinen zu reinigenden Wäschestücken ist in der Regel noch größer. Allen wasserführenden Haushaltsgeräten ist gemeinsam, dass in der feuchtwarmen Atmosphäre, insbesondere an weniger gut zugänglichen Stellen, Verunreinigungen entstehen und sich anreichern können. Diese Verunreinigungen können ein guter Nährboden für Mikroorganismen wie Bakterien oder Pilze sein.

Insbesondere bei in einem Haushaltsgerät stehendem Wasser besteht ein Hygieneproblem. So kann es in einem Wäschebehandlungsgerät, wie beispielsweise einer Waschmaschine bei Nutzung eines Wasserspeichers, häufiger Anwendung von Waschprogrammen mit kalten Laugen, langen Stillstandphasen mit geschlossener Tür oder unter ungünstigen Aufstellbedingungen zu Verunreinigungen kommen, insbesondere zur Bildung von Biofilmen, die aus organischen Substanzen wie Mikroorganismen und Nährstoffen bestehen. Diese Biofilme führen zu Geruchsbeeinträchtigungen und/oder sichtbaren Verunreinigungen. Sogar krankheitserregende Auswirkungen sind denkbar. Insbesondere bilden sich Biofilme in Bereichen der Waschmaschine, in denen über längere Zeit, also auch während Stillstandphasen, Wasser vorhanden ist. Dazu zählen schlecht belüftete Bereiche, beispielsweise Rippen, Taschen, Manschettenfalze, Wasserzu- und abläufe, und vor allem Wasserspeicher, die dazu dienen, das Grauwasser, das im Wasch- oder Spülprozess anfällt, zu speichern, um es in einem späteren Wasch- oder Spülgang wieder zu verwenden. Wünschenswert wäre daher eine Möglichkeit, das Wasser in einem Haushaltsgerät zu hygienisieren sowie die Bildung von Biofilmen zu verhindern.

Aus dem Stand der Technik sind verschiedene Maßnahmen zur Beseitigung und/oder Vermeidung von Biofilmen bekannt. Insbesondere werden bisweilen Gerätereinigungsprogramme angeboten, die bei hohen Temperaturen mit Unterstützung von Waschmitteln und teilweise unter erhöhten Flottenständen und/oder bei höheren Trommeldrehzahlen, d.h. bei erhöhtem Eintrag mechanischer Energie, entstandene Verschmutzungen wieder beseitigen. Bekannt ist außerdem die Verwendung von Ozon zur Entfernung von organischen Verunreinigungen.

Ebenso wurde bereits vorgeschlagen, mit Hilfe von UV-C-Strahlern im Durchlaufprinzip organische Verschmutzungen zu beseitigen, wobei die Beseitigung in der Weise erfolgt, dass Mikroorganismen in solchen Verschmutzungen durch Schädigung ihrer Erbsubstanzen letztlich abgetötet werden. Auch photokatalytische Methoden sind bekannt, beispielsweise der Einsatz von Titandioxidbeschichtungen für die Desodorierung, Desinfizierung und Reinigung. Hierbei ist eine Aktivierung des Katalysators durch UV-Strahlung nötig.

Bekannt sind ebenfalls Maßnahmen zur Abtötung von Mikroorganismen unter Verwendung von Ag⁺- oder Cu⁺-Ionen in der Waschflotte bzw. auf den Oberflächen der mit der Waschflotte in Berührung stehenden Materialien.

Andere Verfahren zielen auf die thermische Abtötung eventuell vorhandener Mikroorganismen durch Erhöhung der Temperaturen an den Oberflächen der mit der Waschflotte in Berührung stehenden Bauteile über eine direkte oder indirekte Energieübertragung (Wasser, Dampf, Mikrowelle).

Nachteilig bei diesen bekannten Verfahren und Maßnahmen sind der hohe Energieaufwand sowie teilweise hohe Apparate- und/oder Betriebskosten, um tatsächlich relevante Effekte zu erzielen. Im Falle des Einsatzes von Ag⁺- oder Cu⁺-Ionen kommen nachteilige Auswirkungen hinsichtlich Boden- und Gewässerbelastung hinzu. Bei einigen Methoden werden potentiell gesundheitsgefährdende Mittel verwendet, z.B. Ozon oder UV-Strahlung, so dass zusätzliche Sicherheitsmaßnahmen erforderlich sind.

Die Anwendung von Polyoxometallaten ist in unterschiedlichen Bereichen bekannt, beispielsweise in der Analytischen und Klinischen Chemie, in der Katalyse (einschließlich Photokatalyse), in der Biochemie (Inhibierung von Elektronentransferprozessen), in der Medizin (antitumorale und antivirale Aktivität) sowie bei der Herstellung integrierter Schaltkreise. Als Oxidationskatalysatoren sind Polyoxometallate vor allem in der Papier- und Kunststoffindustrie bekannt.

Polyoxometallate sind anorganische Metall-Sauerstoff-Cluster. Sie besitzen im Allgemeinen polyatomische Anionen, die aus drei oder mehr Übergangsmetall-Oxyanionen, insbesondere Wolframat, Molybdat, Vanadat, Niobat und/oder Tantalat, aufgebaut und über Sauerstoffatome verbrückt sind. Polyoxometallate können eine große dreidimensionale Netzwerkstruktur mit definierten oligomeren oder polymeren Struktureinheiten bilden.

Ihrer Struktur entsprechend werden die Polyoxometallate in Iso- und Heteropolyoxometallate unterteilt. Isopolyoxometallate sind die einfachsten Formen von Polyoxometallaten und lassen sich als binäre, d. h. nur Metallion und Sauerstoff enthaltende Oxid-Anionen beschreiben. Typische Beispiele für derartige Isopolyoxometallate sind [Mo₂O₇]²⁻, [W₆O₂₄]¹²⁻, [Mo₆O₁₆]²⁻, [Mo₃₆O₁₁₂]⁸⁻. Im Unterschied hierzu enthalten Heteropolyoxometallate, die in großem Umfang als Oxidationskatalysatoren verwendet werden, noch weitere Nichtmetall-, Halbmetall- und/oder Übergangsmetallionen. So sind z. B. übergangsmetalldotierte, sogenannte Keggin-Anionen der Formel [APW₁₁O₃₉]^{7-/8-} mit A = Zn, Co, Ni, Mn und Dawson-Anionen [AP₂W₁₇O₆₁]^{7-/8-} mit A = Mn, Fe, Co, Ni, Cu bekannt, die zusätzlich auch Kristallwasser gebunden haben können. Weitere Substitutionen, auch unterschiedlicher Übergangsmetallionen, sind bekannt, z. B. [WZnMn₂(ZnW₉O₃₄)₂]¹²⁻. Der Ladungsausgleich der vorstehend beschriebenen Anionen erfolgt entweder über Protonen, wobei die entsprechenden Polysäuren erhalten werden, oder über Kationen unter Bildung entsprechender Salze der Polysäuren (Heteropolyoxometallate).

Der hierin verwendete Begriff "Polyoxometallat" umfasst sowohl Salze der Polysäuren als auch die entsprechenden Polysäuren selbst.

Im Haushalt ist die Anwendung von Polyoxometallaten als Bleichekatalysatoren bekannt. Beim Bleichen wird die Struktur eines Farbstoffs durch ein starkes Oxidationsmittel (Bleichmittel) zerstört. Bekannt sind vor allem Bleichmittel auf Sauerstoffbasis wie Peroxide und Bleichmittel auf Chlorbasis. Um die Wirkung der relativ milden Bleichmittel auf Sauerstoffbasis, vor allem bei Waschtemperaturen bis 60°C, zu verstärken, ist der Einsatz von Bleichaktivatoren und/oder Bleichkatalysatoren bekannt.

Die EP 0 761 809 B1 beschreibt eine Bleichmittelzusammensetzung, die Polyoxometallate als Bleichmittelkatalysator enthält. Dabei steigern Polyoxometallate bereits in geringen Mengen die Wirksamkeit von Bleichmitteln wie Wasserstoffperoxid, anorganischen und organischen Persäuren bzw. Caroaten. Die beschriebene Bleichmittelzusammensetzung umfasst Bleichmittel (Peroxid) und Bleichmittelkatalysatoren (Polyoxometallate) und kann beispielsweise in Waschmitteln, Reinigungsmitteln, Desinfektionsmitteln und Gebissreinigern verwendet werden.

Die EP 1 141 210 B1 beschreibt ein Verfahren zum Bleichen von Wäsche oder Haushaltsoberflächen, bei dem ein Waschmedium, das Polyoxometallate enthält, mit dem verschmutzten Substrat in Kontakt gebracht wird. Dabei dient Luft als primäre Quelle von Sauerstoffatomen zum Bleichen.

Die WO 2005/059226 A1 beschreibt ein Verfahren zum Wäschewaschen in einer Waschmaschine, wobei die Ionenstärke der Waschlauge während eines Waschganges geändert wird, um die Reinigungsfähigkeit der Waschlauge zu optimieren. Dabei kann die Waschmittellauge ein Bleichmittelsystem enthalten. Als bleichende Oxidationskatalysatoren mit Peroxybleichmitteln und Luft werden in diesem Zusammenhang anorganische Polyoxometallate beschrieben.

Die DE 10 2009 026 712 A1 beschreibt ein Hausgerät mit mindestens einem Bauteil, welches eine durch eine organische Verschmutzung belastbare Oberfläche aufweist, welche Oberfläche einen Photokatalysator aufweist und welcher Oberfläche eine Photoquelle zum Bestrahlen des Photokatalysators mit einer aktivierenden elektromagnetischen Strahlung zugeordnet ist, wobei die Oberfläche von einem urgeformten ersten Werkstoff gebildet ist, in welchem der Photokatalysator dispergiert ist. Als Photokatalysator sind in großem Detail Materialien mit Titandioxid und dessen Modifikationen beschrieben.

Aufgabe der vorliegenden Erfindung war es vor diesem Hintergrund, ein wasserführendes Haushaltsgerät sowie ein Verfahren zu seinem Betrieb bereitzustellen, bei dem auf einfache und besonders hygienische Weise Verunreinigungen beseitigt oder verhindert oder zumindest weitgehend beseitigt oder verhindert werden können. Vorzugsweise sollen Verunreinigungen mit Mikroorganismen beseitigt oder verhindert werden.

Die Lösung dieser Aufgabe wird erfindungsgemäß erreicht durch ein wasserführendes Haushaltsgerät sowie ein Verfahren zu seinem Betrieb mit den Merkmalen der entsprechenden unabhängigen Patentansprüche 1 und 12. Bevorzugt Ausführungsformen des erfindungsgemäßen Haushaltsgeräts sind in den entsprechenden abhängigen Patentansprüchen aufgeführt. Bevorzugten Ausführungsformen des erfindungsgemäßen Haushaltsgeräts entsprechen bevorzugte Ausführungsformen des erfindungsgemäßen Verfahrens und umgekehrt, auch wenn dies hierin nicht explizit festgestellt wird.

Hierbei ist ein wasserführendes Haushaltsgerät im Allgemeinen ein Haushaltsgerät, bei dessen Betrieb Wasser eingesetzt wird. Die zu reinigenden Gegenstände können insbesondere Geschirr oder Wäsche sein. Unter Reinigen wird erfindungsgemäß auch ein Auffrischen verstanden.

Das erfindungsgemäße wasserführende Haushaltsgerät ermöglicht, dass das Wasser im Haushaltsgerät auf effiziente, kostengünstige und umweltfreundliche Art und Weise derart behandelt werden kann, dass organische Substanzen wie Mikroorganismen und Nährstoffe abgebaut werden und somit einem Biofilm im Haushaltsgerät entgegengewirkt werden kann. Dabei wird insbesondere die Eigenschaft von Polyoxometallaten, als Oxidationskatalysator zu wirken, ausgenutzt. An der Polyoxometallat enthaltenden inneren Oberfläche des Haushaltsgeräts bilden sich im Allgemeinen in Gegenwart eines Oxidationsmittels, wie beispielsweise Sauerstoff, Wasserstoffperoxid oder Ozon, Sauerstoffradikale (oder Sauerstoff enthaltende Radikale, im Folgenden zusammenfassend als "Sauerstoffradikale" bezeichnet). Aufgrund ihrer chemischen Reaktivität können diese Sauerstoffradikale insbesondere organische Verbindungen zersetzen und sind folglich schädlich für Mikroorganismen. Auf diese Weise werden organische Substanzen in dem Wasser, das mit der Polyoxometallat beschichteten inneren Fläche des Haushaltsgeräts in Kontakt gebracht wird, abgebaut und somit wird einem Biofilm entgegen gewirkt.

Zu den erfindungsgemäß verwendeten Polyoxometallaten zählen die vorstehend genannten Polyoxometallate und die in der EP 0761 809 B1 und der EP 1 141 210 B1 beschriebenen Polyoxometallate.

Bevorzugt ist das Polyoxometallat ein Wolframat. Hierbei kann es sich um ein Isopolywolframat oder ein Heteropolywolframat handeln. Besonders bevorzugt wird ein Titan-modifiziertes Wolframat eingesetzt.

Die Polyoxometallat enthaltende Oberfläche kann auf beliebige Weise erzeugt werden, solange die erfindungsgemäße katalytische Wirkung möglich ist. So kann sie beispielsweise durch Bildung eines Polyoxometallat enthaltenden Filmes erzeugt werden oder aber z.B. durch Platzierung von Polyoxometallat-Partikeln an der Oberfläche eines porösen Materials. Die Erzeugung wird insbesondere von Ort und Art der Anwendung abhängen.

Es ist erfindungsgemäß bevorzugt, dass die Polyoxometallat enthaltende Oberfläche eine Dicke von nicht mehr als 50 µm und besonders bevorzugt eine Dicke von nicht mehr als 10 µm hat.

Bei der Oxidationsreaktion dient das Polyoxometallat im Allgemeinen als Oxidationskatalysator, der zusammen mit einem Oxidationsmittel wirkt. Das Oxidationsmittel ist erfindungsgemäß nicht eingeschränkt. Vorzugsweise werden Sauerstoff enthaltende Oxidationsmittel eingesetzt. Hierbei sind Sauerstoff, anorganische oder organische Peroxide und/oder Ozon als Oxidationsmittel besonders bevorzugt. Unter diesen ist wiederum Sauerstoff als Oxidationsmittel besonders bevorzugt, da hierdurch ein zusätzlicher Eintrag von möglicherweise schädlichen oder störenden Substanzen vermieden werden kann. Als Quelle für Sauerstoff dient dabei insbesondere Luft. Wenn organische Peroxide als Oxidationsmittel dienen, sind im Waschmittel bereits vorhandene Peroxide bevorzugt.

Ozon ist als Oxidationsmittel in Haushaltsgeräten mit einem Ozongenerator bevorzugt. Derartige Haushaltsgeräte verfügen vorzugsweise über eine Ozonbeseitigungsvorrichtung.

Um eine fortlaufende Oxidationsreaktion zu ermöglichen, sollte eine ausreichende Mobilität der oxidierenden Spezies, z.B. von Sauerstoffradikalen, die an der als Oxidationskatalysator wirkenden Polyoxometallat enthaltenden inneren Oberfläche erzeugt wurden, gegeben sein. Außerdem sollte eine ausreichend hohe Konzentration an Oxidationsmittel im zu behandelnden Wasser vorhanden sein, um eine gewünschte Hygienewirkung zu erreichen.

Im erfindungsgemäßen Haushaltsgerät können beliebige innere Oberflächen Polyoxometallat enthalten, solange sie während des Betriebs des Haushaltsgeräts in Kontakt mit Wasser kommen können. Erfindungsgemäß bevorzugt kommt mindestens eine innere Oberfläche während des Betriebs des Haushaltsgeräts mit fließendem oder ruhenden Wasser in Kontakt. Der Kontakt ist nötig, da organische Substanzen im Wasser des Haushaltsgeräts durch den Kontakt mit der Polyoxometallat enthaltenden Oberfläche vermittelt oxidiert und dadurch abgebaut werden.

Somit eignen sich erfindungsgemäß insbesondere solche inneren Oberflächen des Haushaltsgeräts zur Polyoxometallat-Beschichtung, die in Kontakt mit sich bewegendem Wasser stehen, beispielsweise Wasserzulaufsysteme, Durchströmungselemente, oder Behälter zur Aufnahme von zu reinigenden Gegenständen wie dem Laugenbehälter in einer Waschmaschine oder in einem Geschirrspüler.

In einer bevorzugten Ausführungsform des wasserführenden Haushaltsgerätes ist die mindestens eine innere Oberfläche auf einer inneren Wand und/oder einem Durchströmungselement des Haushaltsgerätes angeordnet.

Hierbei ist vorzugsweise die mindestens eine innere Oberfläche, welche Polyoxometallat enthält, im Wasserzulaufsystem angeordnet. Dabei werden unter dem Begriff Wasserzulaufsystem diejenigen Teile des Haushaltsgeräts verstanden, die der Zuleitung des Wassers in das Gerät dienen, beispielsweise ein Ventil und eine Zuleitung in Waschmaschine oder Geschirrspüler. Auf diese Weise wird erreicht, dass bereits das in das Gerät eingetragene Wasser hygienisiert wird. Außerdem handelt es sich hier um Bereiche des Gerätes mit vergleichsweise hoher Mobilität des Wassers, die somit einen vorteilhaften Reaktionsablauf ermöglichen.

In einer weiteren bevorzugten Ausführungsform der Erfindung ist die mindestens eine innere Oberfläche auf einem Durchströmungselement des Haushaltsgerätes angeordnet. Unter Durchströmungselementen werden im Allgemeinen Bauteile verstanden, die im Strömungsfluss des Wassers im Haushaltsgerät angebracht sind. Dabei handelt es sich vorzugsweise um gitter- oder filterartige Strukturen. Dabei können erfindungsgemäß bereits im Haushaltsgerät zu anderen Zwecken vorhandene Durchströmungselemente mit einer Polyoxometallat enthaltenden inneren Oberfläche versehen werden oder zusätzliche Polyoxometallat auf einer inneren Oberfläche enthaltende Durchströmungselemente im Haushaltsgerät angeordnet werden. Hierbei bedeutet "innere Oberfläche", dass sich die Oberfläche der Durchströmungselemente im Inneren des Haushaltsgerätes befindet.

Auch bei Polyoxometallat beschichteten Durchströmungselementen wird die hohe Mobilität des Wassers vorteilhaft für die Reaktion ausgenutzt. Zusätzlich sind Durchströmungselemente aufgrund ihrer vergleichsweise großen Oberfläche, und somit großen Kontaktfläche mit dem Wasser, besonders vorteilhaft. Außerdem kann durch einfache Modifizierungen die Polyoxometallat enthaltende innere Oberfläche bei Durchströmungselementen weiter vergrößert werden und es können für die Oxidationsreaktion vorteilhafte Turbulenzen im Wasserstrom erzeugt werden.

Um eine möglichst vollständige Reaktion zu gewährleisten, ist eine möglichst große Kontaktfläche des Wassers mit der Polyoxometallat enthaltenden inneren Oberfläche bevorzugt. Dies kann erfindungsgemäß durch das Anbringen von oberflächenvergrößernden Strukturen wie Ausstülpungen, gitterartige Strukturen, zusätzliche Platten etc. an der inneren Polyoxometallat enthaltenden Oberfläche, erreicht werden, so dass insgesamt eine größere Polyoxometallat enthaltende Oberfläche bereit gestellt werden kann. Solche oberflächenvergrößernden Strukturen können außerdem in vorteilhafter Weise bei entsprechender Anbringung im Strömungsfluss des Wassers für zusätzliche Turbulenzen und somit Mobilität und, bei Verwendung von Sauerstoff, Sauerstoffeintrag sorgen.

In einer besonders bevorzugten Ausführungsform ist die innere Polyoxometallat enthaltende Oberfläche, eine innere Oberfläche eines Wasserspeichers. In Haushaltsgeräten, wie beispielsweise in Waschmaschinen und Geschirrspülern, können Wasserspeicher angeordnet sein, um Grauwasser, d.h. gering verschmutztes Abwasser, aus dem Wasch- und/oder Spülprozess zu speichern und in späteren Wasch- und/oder Spülvorgängen wieder zu benutzen. Dies ist aus Umweltgründen und wirtschaftlichen Gründen vorteilhaft. Allerdings verändert sich der hygienische Zustand des Wassers, wenn dieses über längere Zeit gelagert wird, durch im Wasser vorhandene Mikroorganismen. Insbesondere bei Grauwasser aus dem Wäschepflege- oder Geschirrspülprozess begünstigen die darin enthaltenen Nährstoffe Wachstum und Ausbreitung von Mikroorganismen. Somit ist die Lagerung des Grauwassers in Haushaltsgeräten mit einem Wasserspeicher über längere Zeit bisher problematisch.

Folglich wird durch eine Polyoxometallat enthaltende innere Oberfläche des Wasserspeichers eine längere Hygieneerhaltung des gespeicherten Wassers ermöglicht. Auf diese Weise kann Grauwasser aus dem Wasch- oder Spülprozess ohne Verlust der hygienischen Eigenschaften über längere Zeit gelagert werden. Die Anordnung der Polyoxometallat enthaltenden inneren Oberfläche des Wasserspeichers ist erfindungsgemäß nicht beschränkt und umfasst Modifikationen des Wasserspeichers, die einem verbesserten Reaktionsablauf dienen. Im einfachsten Fall kann die innere Oberfläche des herkömmlichen Wasserspeichers mit einer Polyoxometallat enthaltenden Schicht versehen sein. In einer weiteren Ausführungsform können zusätzliche Platten oder Ausstülpungen im Wasserspeicher für eine vergrößerte innere Oberfläche und somit für eine vergrößerte Polyoxometallat enthaltende innere Oberfläche sorgen. Weiterhin sind netz- oder gitterartige Strukturen im Wasserspeicher bevorzugt, die für eine vergrößerte innere Oberfläche, die Polyoxometallat enthält, sorgen.

In einer weiteren bevorzugten Ausführungsform beinhaltet der Wasserspeicher ein Umwälzelement und/oder ein Lufteinleitungselement. Dabei wird unter einem Umwälzelement ein Bauteil verstanden, welches das Wasser in Bewegung versetzen ("umwälzen") kann. In der Regel geschieht das Umwälzen auf mechanische Weise. Unter einem Lufteinleitungselement wird ein Bauteil verstanden, durch das Luft in den Wasserspeicher gelangen kann. Auf diese Weise wird eine ausreichende Mobilität der an der Katalysatoroberfläche erzeugten oxidierenden Spezies, z.B. Sauerstoffradikale, gewährleistet, um eine fortlaufende Reaktion zu ermöglichen. Außerdem wird hierbei eine genügend hohe Sauerstoffkonzentration im Wasser ermöglicht, um eine möglichst vollständige Katalysatorreaktion bereit zu stellen.

Das wasserführende Haushaltsgerät ist erfindungsgemäß nicht eingeschränkt. So kommen z.B. Wasserkocher, Kaffeemaschinen, Dampfbügeleisen etc. in Frage. Insbesondere ist das wasserführende Haushaltsgerät ein Haushaltsgerät, das an das Hauswassernetz angeschlossen werden kann. Vorzugsweise ist das wasserführende Haushaltsgerät ein Geschirrspüler oder ein Wäschebehandlungsgerät. Besonders bevorzugt handelt es sich um ein Wäschebehandlungsgerät aus der Gruppe bestehend aus Waschmaschine und Waschtrockner.

Eine Waschmaschine oder ein Waschtrockner umfassen im Allgemeinen neben einer Trommel als Aufnahmebehälter für die zu behandelnden Wäschestücke einen Laugenbehälter, ein Wasserzulaufsystem, eine Einspülschale zur Bereitstellung eines Wäschepflegemittels und ein am Boden des Laugenbehälters angeordnetes Laugenablaufsystem mit einer Pumpe sowie gegebenenfalls einen Wasserspeicher.

In einer bevorzugten Ausführungsform weist die Waschmaschine oder der Waschtrockner einen Laugenbehälter und/oder eine Einspülschale mit einer inneren Polyoxometallat enthaltenden Oberfläche auf. Der Laugenbehälter und die Einspülschale zählen zu den Bereichen der Waschmaschine, die durch einen hohen Eintrag von organischen Substanzen durch die Wäschepflegemittel und unzureichende Belüftung besonders anfällig für eine Ablagerung von Biofilmen sind. Durch die Beschichtung mit Polyoxometallaten wird einer solchen Biofilmbildung entgegen gewirkt. Außerdem ist in der Einspülschale und im Laugenbehälter während des Betriebs der Waschmaschine eine vergleichsweise hohe Mobilität des Wassers gegeben, so dass eine Oxidationsreaktion vorteilhaft ablaufen kann. Zusätzlich hat eine Beschichtung mit Polyoxometallat in Einspülschale und Laugenbehälter den Vorteil, dass in den Wäschepflegemitteln vorhandene Bleichmittel durch die Polyoxometallate aktiviert werden und somit eine bessere Wirksamkeit entfalten können. Dadurch können die Wäschepflegemittel niedriger dosiert werden, was wirtschaftliche und Umweltvorteile mit sich bringt. Weiterhin kann in dieser Ausführungsform auf Bleichsysteme mit Polyoxometallatzusätzen verzichtet werden.

An der Polyoxometallat enthaltenden inneren Oberfläche des Haushaltsgeräts bilden sich in Gegenwart eines Oxidationsmittels, das beispielsweise im Wasser gelöst oder vermischt vorliegen kann, z.B. Sauerstoffradikale. Kommen diese sehr reaktiven Sauerstoffradikale in Kontakt mit im Wasser vorhandenen organischen Substanzen, einschließlich Mikroorganismen, läuft eine Oxidationsreaktion ab, die zum Abbau der organischen Substanzen bzw. zu pathologischen Prozessen bei den Mikroorganismen führt. Auf diese Weise wird der Bildung eines Biofilms entgegen gewirkt.

In einer bevorzugten Ausführungsform wird wie bereits erwähnt ein Sauerstoff enthaltendes Oxidationsmittel verwendet, insbesondere Sauerstoff, wobei Luft als Quelle für den Sauerstoff dient. Dabei kann der Sauerstoff beispielsweise im Wasser gelöst vorliegen. Außerdem kann es durch eine entsprechende Bewegung des Wassers zu einer Vermischung von Luft und Wasser kommen, beispielsweise zur Ausbildung von Luftbläschen im Wasser, und ein solches Luft-Wasser-Gemisch kann in Kontakt mit der Polyoxometallat enthaltenden Oberfläche gebracht werden, wobei vorzugsweise der Luftsauerstoff als Oxidationsmittel dient. Dabei sorgt besonders bevorzugt ein Lufteinleitungselement für eine ausreichende Menge an Sauerstoff im zu behandelnden Wasser.

In einer weiteren bevorzugten Ausführungsform wird ein Peroxid oder Ozon als Oxidationsmittel verwendet.

Wenn ein Peroxid als Oxidationsmittel verwendet wird, wird bevorzugt bereits im Wäschepflegemittel vorhandenes Peroxid benutzt. Dies erspart die Zugabe von zusätzlichem Peroxid. Vorzugsweise ist die Polyoxometallat enthaltende Oberfläche in der Einspülschale oder im Laugenbehälter, besonders bevorzugt im Laugenbehälter, angeordnet, wenn Peroxide als Oxidationsmittel dienen. Dies ist darin begründet, dass Peroxide insbesondere in Vollwaschmittel und Bleichmittel vorkommen, wobei insbesondere Bleichmittel häufig direkt in der Trommel zugesetzt werden.

Vorzugsweise kann der Benutzer des Wäschebehandlungsgeräts über eine Optionstaste angeben, ob Vollwaschmittel oder Bleichmittel eingesetzt wurden. Alternativ kann die Anwesenheit von starken Oxidationsmitteln wie Peroxiden oder Ozon über einen oder mehrere Sensoren in der Waschmaschine festgestellt werden. Bei festgestellter Anwesenheit von Ozon oder Peroxiden kann so beispielsweise auf den Betrieb eines Umwälzungselementes oder Lufteinleitungselements verzichtet werden.

Ozon kann vorteilhaft bei Geräten mit Ozongenerator als Oxidationsmittel benutzt werden. Vorzugsweise verfügt ein solches Gerät zusätzlich über eine Ozonbeseitigungsvorrichtung. Die Polyoxometallat enthaltende Oberfläche ist dann so angeordnet, dass sie in Kontakt mit Wasser und Ozon kommen kann. Beispielsweise ist bei einer Waschmaschine, bei der Ozon in den Laugenbehälter eingeleitet werden kann, die Polyoxometallat enthaltende Oberfläche entsprechend im Laugenbehälter angeordnet.

Die Erfindung hat den Vorteil, dass auf einfache und kostengünstige Weise ein wasserführendes Haushaltsgerät zur Verfügung gestellt wird, das deutlich weniger zu Verunreinigungen, insbesondere auch mit Mikroorganismen, neigt und für den Fall dennoch auftretender Verunreinigungen leicht zu reinigen ist.

Dabei liegt ein besonderer Vorteil der Verwendung von Polyoxometallat enthaltenden inneren Oberflächen darin, dass diese über Jahre hinweg als katalytisches System funktionieren können, ohne dass eine zusätzliche Aktivierung oder ein zusätzlicher Energieverbrauch nötig wäre. Nur bei Verwendung eines zusätzlichen Umwälz- oder Lufteinleitungselements würde ein zusätzlicher Energieverbrauch stattfinden, wobei dieser im Vergleich zu anderen Wasseraufbereitungsverfahren wie Membranfiltrationsverfahren oder elektrochemischen Verfahren vergleichsweise gering ausfiele. Außerdem müssen keine zusätzlichen Reagenzien hinzu dosiert werden und auch eine Aktivierung des Katalysators, beispielsweise durch UV-Strahlung, entfällt. Zusätzliche Vorteile von Polyoxometallat enthaltenden Oberflächen liegen in der verbesserten Wirksamkeit von Bleichmitteln durch deren Aktivierung, falls solche verwendet werden. Außerdem können Polyoxometallate viruzide Wirkungen haben. Somit wird durch die vorliegende Erfindung ein Wasseraufbereitungssystem für Haushaltsgeräte nahezu ohne laufende Kosten und mit langer Lebensdauer bereitgestellt.

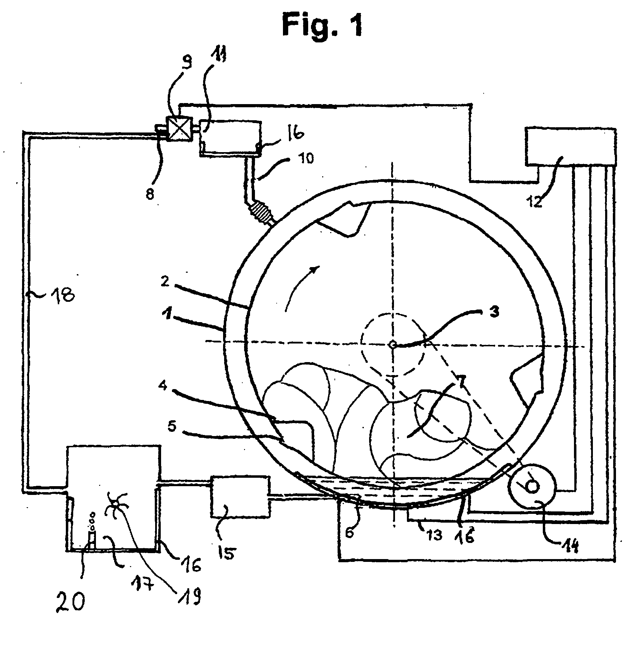

Die Erfindung wird im Folgenden anhand der Figur 1 näher illustriert.

Figur 1 ist eine schematische Darstellung der vorliegend relevanten Teile einer als Waschmaschine gestalteten Ausführungsform des erfindungsgemäßen Haushaltsgeräts. Andere Ausführungsformen sind denkbar.

Die Waschmaschine der in Figur 1 gezeigten Ausführungsform weist einen Laugenbehälter 1 auf, in dem eine Trommel 2 drehbar gelagert und durch einen Antriebsmotor 14 betrieben werden kann. Aus ergonomischen Gründen ist die Drehachse 3 der Trommel 2 aus der Horizontalen um einen kleinen Winkel nach oben vorne gerichtet, so dass ein leichterer Zugang und Einblick in das Innere der Trommel 2 gegeben ist. Durch diese Anordnung wird im Zusammenwirken mit besonders geformten Wäschemitnehmern 4 und Schöpfeinrichtungen 5 für die Waschlauge 6 an der Innenfläche des Trommelmantels außerdem eine Intensivierung der Durchflutung der Wäsche 7 mit der Waschlauge erreicht.

Die Waschmaschine weist zudem ein Wasserzulaufsystem auf, das eine Wasseranschlussarmatur für das Hauswasssernetz 8, ein elektrisch steuerbares Ventil 9 und eine Zuleitung 10 zum Laugenbehälter umfasst, die über eine Einspülschale 11 geführt ist, aus der die Zulaufflüssigkeit Waschmittelportionen in den Laugenbehälter 1 transportieren kann.

Im Laugenbehälter befindet sich außerdem eine Heizeinrichtung 13. Ventil 9 und Heizeinrichtung 13 können durch eine Programmsteuerung 12 in Abhängigkeit von einem Programmablaufplan gesteuert werden, der an ein Zeitprogramm und/oder an das Erreichen von gewissen Messwerten von Parametern wie Laugenniveau, Laugentemperatur, Drehzahl der Trommel 2 usw. innerhalb der Waschmaschine gebunden sein kann. 15 bedeutet eine Pumpe für die im Laugenbehälter 1 befindliche Flüssigkeit.

Ein Wasserspeicher 17 kann das Grauwasser, das beim Spülen der Wäsche verwendet wurde, speichern. Dieses Grauwasser kann für einen späteren Waschgang eingesetzt werden. Dazu ist der Wasserspeicher 17 über eine Leitung ("Zuleitung für Spülflüssigkeit") 18 mit dem Ventil 9 verbunden, das auch die Frischwasserzufuhr regelt. Im Wasserspeicher 17 ist ein Umwälzelement 19 und ein Lufteinleitungselement 20 vorhanden, die ebenfalls über die Programmsteuerung 12 gesteuert werden können. Durch diese Maßnahmen ist im Wasserspeicher 17 eine besonders effiziente Oxidationsreaktion an der inneren Oberfläche 16 möglich.

In der Einspülschale 11, im Laugenbehälter 1 und im Wasserspeicher 17 sind innere Oberflächen 16, welche Titan-modifiziertes Wolframat enthalten, aufgebracht.

### Bezugszeichenliste

- 1: Laugenbehälter
- 2: Wäschetrommel
- 3: Drehachse der Trommel
- 4: Wäschemitnehmer
- 5: Schöpfeinrichtungen
- 6: Waschlauge
- 7: Wäsche
- 8: Hauswassernetz
- 9: Ventil
- 10: Zuleitung
- 11: Einspülschale
- 12: Programmsteuerung
- 13: Heizeinrichtung
- 14: Antriebsmotor
- 15: Pumpe
- 16: eine katalytisch wirkende Substanz (Polyoxometallat) enthaltende innere Oberfläche
- 17: Wasserspeicher
- 18: Zuleitung für Spülflüssigkeit
- 19: Umwälzelement
- 20: Lufteinleitungselement

## Patentansprüche

1. Wasserführendes Haushaltsgerät mit einem Behälter (2) zur Aufnahme von zu reinigenden Gegenständen (7) und mindestens einer eine katalytisch wirksame Substanz enthaltenden inneren Oberfläche (16), die sich im Inneren des Haushaltsgerätes befindet, **dadurch gekennzeichnet, dass** die katalytisch wirksame Substanz ein Polyoxometallat ist und die innere Oberfläche (16) beim Betrieb des Haushaltsgeräts mit zu reinigendem Wasser in Kontakt kommt.

2. Wasserführendes Haushaltsgerät nach Anspruch 1, **dadurch gekennzeichnet, dass** das Polyoxometallat ein Wolframat ist.

3. Wasserführendes Haushaltsgerät nach Anspruch 2, **dadurch gekennzeichnet, dass** das Wolframat Titan-modifiziert ist.

4. Wasserführendes Haushaltsgerät nach einem der Ansprüche 1 bis 3, **dadurch gekennzeichnet, dass** die mindestens eine innere Oberfläche (16) während des Betriebs des Haushaltsgeräts mit fließendem oder ruhenden Wasser in Kontakt kommt.

5. Wasserführendes Haushaltsgerät nach einem der Ansprüche 1 bis 4, **dadurch gekennzeichnet, dass** die mindestens eine innere Oberfläche (16) auf einer inneren Wand und/oder einem Durchströmungselement des Haushaltsgerätes, das im Strömungsfluss des Wassers im Haushaltsgerät angebracht ist, angeordnet ist.

6. Wasserführendes Haushaltsgerät nach einem der Ansprüche 1 bis 5, **dadurch gekennzeichnet, dass** die mindestens eine innere Oberfläche (16) im Wasserzulaufsystem (9, 10) angeordnet ist.

7. Wasserführendes Haushaltsgerät nach einem der Ansprüche 1 bis 6, **dadurch gekennzeichnet, dass** die mindestens eine innere Oberfläche (16) in einem Wasserspeicher (17) angeordnet ist.

8. Wasserführendes Haushaltsgerät nach Anspruch 7, **dadurch gekennzeichnet, dass** der Wasserspeicher (17) ein Umwälzelement (19) und/oder ein Lufteinleitungselement (20) beinhaltet.

9. Wasserführendes Haushaltsgerät nach einem der Ansprüche 1 bis 8, **dadurch gekennzeichnet, dass** das Haushaltsgerät ein Geschirrspülgerät oder ein Wäschebehandlungsgerät ist.

10. Wasserführendes Haushaltsgerät nach Anspruch 9, **dadurch gekennzeichnet, dass** das Haushaltsgerät ein Wäschebehandlungsgerät aus der Gruppe bestehend aus Waschmaschine und Waschtrockner ist.

11. Wasserführendes Haushaltsgerät nach Anspruch 10, **dadurch gekennzeichnet, dass** das Haushaltsgerät einen Laugenbehälter (1) und/oder eine Einspülschale (11) mit einer inneren Oberfläche (16), die Polyoxometallat enthält, aufweist.

12. Verfahren zum Betrieb eines wasserführenden Haushaltsgeräts mit einem Behälter (2) zur Aufnahme von zu reinigenden Gegenständen (7) und mindestens einer katalytisch wirksames Polyoxometallat enthaltenden inneren Oberfläche (16), die sich in Inneren der Haushaltsgerätes befindet und beim Betrieb des Haushaltsgeräts mit Wasser in Kontakt kommen kann, **dadurch gekennzeichnet, dass** zu reinigendes Wasser in Kontakt mit der Polyoxometallat enthaltenden Oberfläche (16) gebracht wird.

13. Verfahren nach Anspruch 12, **dadurch gekennzeichnet, dass** Sauerstoff als Oxidationsmittel verwendet wird und Luft als Quelle für den Sauerstoff dient.

14. Verfahren nach Anspruch 13, **dadurch gekennzeichnet, dass** ein Lufteinleitungselement für eine ausreichende Menge an Sauerstoff im zu behandelnden Wasser sorgt, um eine möglichst vollständige Katalysatorreaktion bereit zu stellen.

15. Verfahren nach Anspruch 12, **dadurch gekennzeichnet, dass** ein Peroxid oder Ozon als Oxidationsmittel verwendet wird.

## Claims

1. Water-bearing domestic appliance having a container (2) for receiving objects (7) to be cleaned and at least one inner surface (16) containing a catalytically active substance, said surface being disposed inside the domestic appliance, **characterised in that** the catalytically active substance is a polyoxometalate and the inner surface (16) comes into contact with water to be cleaned during operation of the domestic appliance.

2. Water-bearing domestic appliance according to claim 1, **characterised in that** the polyoxometalate is tungstate.

3. Water-bearing domestic appliance according to claim 2, **characterised in that** the tungstate titanium is modified.

4. Water-bearing domestic appliance according to one of claims 1 to 3, **characterised in that** the at least one inner surface (16) comes into contact with flowing or stationary water during operation of the domestic appliance.

5. Water-bearing domestic appliance according to one of claims 1 to 4, **characterised in that** the at least one inner surface (16) is arranged on an inner wall and/or a flow element of the domestic appliance, which is accommodated in the flow of water in the domestic appliance.

6. Water-bearing domestic appliance according to one of claims 1 to 5, **characterised in that** the at least one inner surface (16) is arranged in the water inlet system (9, 10).

7. Water-bearing domestic appliance according to one of claims 1 to 6, **characterised in that** the at least one inner surface (16) is arranged in a water tank (17).

8. Water-bearing domestic appliance according to claim 7, **characterised in that** the water tank (17) contains a circulating element (19) and/or an air introduction element (20).

9. Water-bearing domestic appliance according to one of claims 1 to 8, **characterised in that** the domestic appliance is a dishwasher or a laundry treatment device.

10. Water-bearing domestic appliance according to claim 9, **characterised in that** the domestic appliance is a laundry treatment device from the group comprising washing machine and tumble dryer.

11. Water-bearing domestic appliance according to claim 10, **characterised in that** the domestic appliance comprises an outer tub (1) and/or a detergent dispenser tray (11) with an inner surface (16) containing polyoxometalate.

12. Method for operating a water-bearing domestic appliance having a container (2) for receiving objects (7) to be cleaned and at least one inner surface (16) containing catalytically active polyoxometalate, which are disposed inside the domestic appliance and can come into contact with water during operation of the domestic appliance, **characterised in that** water to be cleaned is brought into contact with the surface (16) containing polyoxometalate.

13. Method according to claim 12, **characterised in that** oxygen is used as oxidation means and air is used as the source of oxygen.

14. Method according to claim 13, **characterised in that** an air introduction element provides for an adequate quantity of oxygen in the water to be treated in order to provide as complete a catalyst reaction as possible.

15. Method according to claim 12, **characterised in that** a peroxide or ozone is used as oxidation means.

## Revendications

1. Appareil ménager à circulation d'eau comprenant une cuve (2) destinée à loger des objets à nettoyer (7) et au moins une surface intérieure (16) contenant une substance catalytiquement active, laquelle surface intérieure se trouve à l'intérieur de l'appareil ménager, **caractérisé en ce que** la substance catalytiquement active est un polyoxométallate et **en ce que** la surface intérieure (16), lors du fonctionnement de l'appareil ménager, vient en contact avec de l'eau à purifier.

2. Appareil ménager à circulation d'eau selon la revendication 1, **caractérisé en ce que** le polyoxométallate est un tungstate.

3. Appareil ménager à circulation d'eau selon la revendication 2, **caractérisé en ce que** le tungstate est modifié par du titane.

4. Appareil ménager à circulation d'eau selon l'une quelconque des revendications 1 à 3, **caractérisé en ce que** l'au moins une surface intérieure (16), pendant le fonctionnement de l'appareil ménager, vient en contact avec de l'eau en circulation ou de l'eau au repos.

5. Appareil ménager à circulation d'eau selon l'une quelconque des revendications 1 à 4, **caractérisé en ce que** l'au moins une surface intérieure (16) est disposée sur une paroi intérieure et/ou sur un élément d'écoulement de l'appareil ménager, lequel est placé dans l'appareil ménager dans le flux d'écoulement de l'eau.

6. Appareil ménager à circulation d'eau selon l'une quelconque des revendications 1 à 5, **caractérisé en ce que** l'au moins une surface intérieure (16) est disposée dans le système d'arrivée d'eau (9, 10).

7. Appareil ménager à circulation d'eau selon l'une quelconque des revendications 1 à 6, **caractérisé en ce que** l'au moins une surface intérieure (16) est disposée dans un réservoir d'eau (17).

8. Appareil ménager à circulation d'eau selon la revendication 7, **caractérisé en ce que** le réservoir d'eau (17) contient un élément de circulation (19) et/ou un élément d'introduction d'air (20).

9. Appareil ménager à circulation d'eau selon l'une quelconque des revendications 1 à 8, **caractérisé en ce que** l'appareil ménager est un lave-vaisselle ou un appareil de traitement de linge.

10. Appareil ménager à circulation d'eau selon la revendication 9, **caractérisé en ce que** l'appareil ménager est un appareil de traitement de linge du groupe constitué de lavelinge et sèche-linge.

11. Appareil ménager à circulation d'eau selon la revendication 10, **caractérisé en ce que** l'appareil ménager présente une cuve à liquide de lavage (1) et/ou un bac à détergent (11) comprenant une surface intérieure (16) qui contient du polyoxométallate.

12. Procédé de fonctionnement d'un appareil ménager à circulation d'eau comprenant une cuve (2) destinée à loger des objets à nettoyer (7) et au moins une surface intérieure (16) contenant du polyoxométallate catalytiquement actif, qui se trouve à l'intérieur de l'appareil ménager, et qui, lors du fonctionnement de l'appareil ménager, vient en contact avec de l'eau, **caractérisé en ce que** l'eau à purifier est mise en contact avec la surface (16) contenant du polyoxométallate.

13. Procédé selon la revendication 12, **caractérisé en ce que** de l'oxygène est utilisé comme agent d'oxydation et **en ce que** de l'air sert de source pour l'oxygène.

14. Procédé selon la revendication 13, **caractérisé en ce qu'**un élément d'introduction d'air assure une quantité suffisante d'oxygène dans l'eau à traiter, afin de fournir une réaction de catalyseur si possible complète.

15. Procédé selon la revendication 12, **caractérisé en ce qu'**un peroxyde ou de l'ozone est utilisé comme agent d'oxydation.
